(19) Europäisches Patentamt
European Patent Office
Office européen des brevets

(11) **EP 3 271 101 B1**

(12) **EUROPÄISCHE PATENTSCHRIFT**

(45) Veröffentlichungstag und Bekanntmachung des Hinweises auf die Patenterteilung:
**03.07.2019 Patentblatt 2019/27**

(21) Anmeldenummer: **15813228.2**

(22) Anmeldetag: **09.09.2015**

(51) Int Cl.:
**B23F 15/08** (2006.01)     **B23C 3/32** (2006.01)

(86) Internationale Anmeldenummer:
**PCT/AT2015/050220**

(87) Internationale Veröffentlichungsnummer:
**WO 2016/145462 (22.09.2016 Gazette 2016/38)**

(54) **VERFAHREN ZUR HERSTELLUNG EINES STATORS BZW. ZUR BEARBEITUNG DER INNENWANDUNG EINES STATORS**

METHOD FOR PRODUCING A STATOR OR FOR PROCESSING THE INNER WALL OF A STATOR

PROCÉDÉ DE FABRICATION D'UN STATOR OU SERVANT À USINER LA PAROI INTÉRIEURE D'UN STATOR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.03.2015 AT 502202015**

(43) Veröffentlichungstag der Anmeldung:
**24.01.2018 Patentblatt 2018/04**

(73) Patentinhaber: **3 S Schnecken + Spindeln + Spiralen Bearbeitungsgesellschaft mbH**
**4661 Roitham (AT)**

(72) Erfinder: **REISINGER, Walter**
**4663 Laakirchen (AT)**

(74) Vertreter: **Wildhack & Jellinek Patentanwälte**
**Landstraßer Hauptstraße 50**
**1030 Wien (AT)**

(56) Entgegenhaltungen:
**CN-A- 101 147 989     US-A1- 2012 294 687**

EP 3 271 101 B1

## Beschreibung

Die Erfindung betrifft ein Verfahren gemäß dem Oberbegriff des Patentanspruchs 1 sowie eine Vorrichtung gemäß dem Oberbegriff des Patentanspruchs 10. Ein entsprechendes Verfahren und eine entsprechende Vorrichtung ist aus der publizierten Anmeldung US 2012/0294687 A1 bekannt.

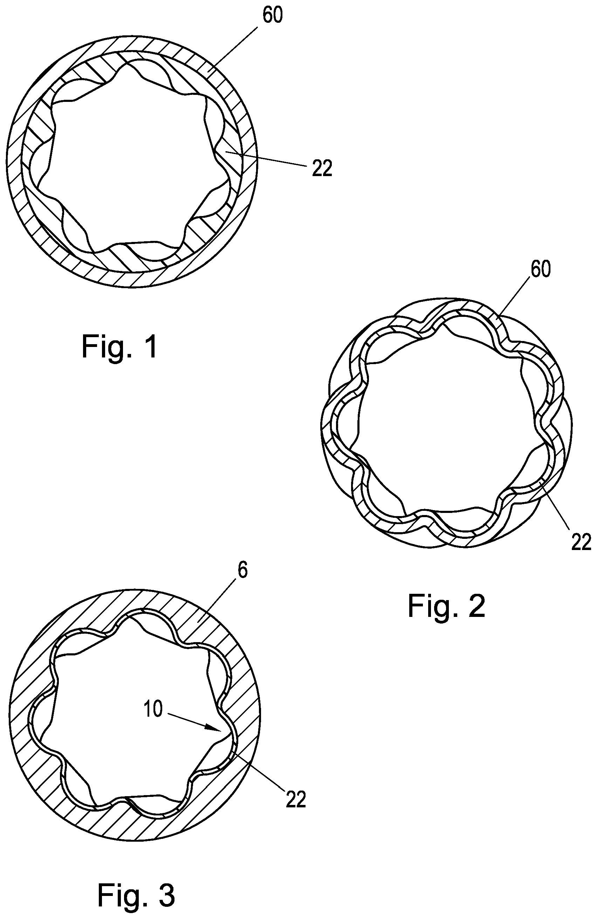

Das Prinzip (Moineau Prinzip) eines Exzenterschneckenmotors beruht auf einem sich drehenden Rotor in einem wendelförmig mit Elastomer ausgekleideten Rohr mit spezieller Innenkontur als Stator. Dabei entsteht durch eine unterschiedliche Anzahl der Steigungen von Rotor und Stator (Rotorsteigungsanzahl = Statorsteigungsanzahl - 1) ein Druckaufbau durch Öffnen und Schließen der durch die differente Steigungsanzahl entstehenden Kammern. Als Standard gilt heute ein Stator, der ein Rohr 60 darstellt mit zylindrischem Außendurchmesser und einer mittels Gummispritzgusstechnik mit einer Elastomerschicht 22 ausgekleideten Innenkontur, wie dieser schematisch in Fig. 1 dargestellt ist. Dabei entstehen beim Betrieb, z.B. als Bohrmotor, hohe Drücke an den Flanken der Innengeometrie durch den Druckaufbau und durch das Drehmoment, welches notwendig ist, um den Bohrmeißel anzutreiben.

Die eingebrachte Elastomerschicht kann, aufgrund der unterschiedlichen Wandstärke, wobei die Wandstärke der Elastomerschicht am "Berg" größer als im "Tal" ist, nur Drücken bis 24 ca. 40 bar standhalten. Bei höheren Drücken weicht das Elastomer aus. Es entstehen Risse im Elastomer und es kommt zum Leistungsabfall und zur Zerstörung der Innenauskleidung des Stators. Um diesen Umstand zu ändern bzw. zu verbessern, gibt es Statoren, die bereits eine vorgeformte, metallische Innengeometrie aufweisen und mit einer wesentlich dünneren Elastomerschicht mit konstanter Dicke bzw. konstante Wandstärke ausgekleidet werden, wie schematisch in Fig. 2 dargestellt. Dadurch ist es möglich, den Druck auf die Flanken zu erhöhen, da der Widerstand des Metalls am Grund der Elastomerschicht über die gesamte Geometrie und im Speziellen an den Flanken dies zulässt, ohne Drehmoment bzw. Leistung zu verlieren. Diese Technologie wird eingesetzt, indem man ein Rohr 60 in die passende Form drückt und somit die Innenkontur erzeugt und anschließend die Elastomerschicht 22 einbringt. Dies hat den Nachteil, dass für jede verschiedene Innengeometrie oder Steigung eigene Drückwerkzeuge angefertigt werden müssen.

Ziel der Erfindung ist es, ein einfaches, aber exaktes Verfahren und eine einfach aufgebaute Vorrichtung zu erstellen, mit denen rasch und genau Statoren für Exzenterschnecken bzw. Exzenterschneckenmotoren hergestellt werden können. Ferner sollen die hohen Kosten von Drückwerkzeugen wegfallen. Es soll ferner die Erzeugung verschiedenster Innengeometrien mit nur einem Fräswerkzeug und austauschbaren Fräsereinsätzen möglich werden, wobei die verschiedenen Innengeometrien spanabhebend erzeugt werden.

Ein Verfahren der eingangs genannten Art zeigt,

- dass zur Bearbeitung der Innenwand des Statorrohrs zumindest zwei Fräsköpfe eingesetzt werden, und bei Bearbeitungsbeginn einer der Fräsköpfe dem Statorrohr angenähert und bezüglich dieses Endes des Statorrohrs in eine vorgegebenen Position gebracht wird,

- dass der Fräskopf aus dieser definierten Position bezüglich seiner Rundachse und bezüglich seiner Linearachse auf Bearbeitungsgeschwindigkeit beschleunigt und längs seiner Linearachse in das Rohrinnere eingefahren und ein Gewindegang ausgearbeitet wird, bis der Fräskopf zumindest die Längsmitte des Statorrohrs erreicht oder um einen vorgegebenen Wert überschreitet. Erfindungsgemäss zeigt das Verfahren,

- dass, abhängig vom Verlauf der einzelnen Gewindegänge und von der Position des Fräskopfs und/oder vom Ort seines Auftreffens auf das Statorrohr der Austrittspunkt bzw. die Austrittskontur des von diesem Fräskopf auszubildenden Gewindegangs oder eines anderen, auszubildenden Gewindegangs am anderen gegenüberliegenden Ende des Statorrohrs ermittelt oder errechnet wird und der zweite Fräskopf an dieser Stelle mit seiner Bearbeitung der Innenwandfläche des Statorrohrs beginnt und dieser Fräskopf längs seiner Linearachse verschoben und um seine Rundachse verdreht wird, bis dieser Fräskopf die Mitte des Statorrohrs erreicht oder um einen vorgegebenen Wert überschreitet, und

- dass die von dem jeweiligen Fräskopf bis zur Mitte ausgebildeten Gewindegänge mit dem jeweils anderen Fräskopf in der jeweils anderen Hälfte des Statorrohrs fortgesetzt bzw. von der Mitte weiter bis zum jeweils anderen Ende ausgefräst werden.

Das erfindungsgemäße Verfahren bringt insbesondere Vorteile, wenn vorgesehen ist, dass ein Statorrohr bearbeitet wird, dessen Innenkontur ein Verhältnis V von Länge L zum Durchmesser D von $V = L:D \geq 30:1$, vorzugsweise $\geq 40:1$, besitzt.

Eine Bearbeitung des Statorrohrs, bei der sich die beiden Fräsköpfe nicht stören, ergibt sich, wenn während der Bewegung des einen Fräskopfs in das Innere des Statorrohrs zur Längsmitte hinein der andere Fräskopf in derselben Richtung wie der eine Fräskopf aus dem Statorrohr heraus bewegt wird. Dies gilt selbstverständlich auch umgekehrt.

Da die Bearbeitung eines Gewindegangs mitunter einer Vielzahl von Fräsvorgängen bedarf, ist es vorteilhaft, wenn bei jeder Herausbewegung eines Fräskopfs der zuvor bei der Hineinbewegung von diesem Fräskopf gefräste bzw. bearbeitete Gewindegang bearbeitet wird.

Da die Mitte des Statorrohrs exakt zu bearbeiten und flächenebene Übergänge der getrennt gefrästen Hälften des jeweiligen Gewindegangs zu erstellen sind, kann erfindungsgemäß vorgesehen sein, dass während jedes Ein- oder Ausfahrens eines Fräskopfs die halbe Länge eines Gewindegangs, gegebenenfalls zuzüglich zumindest einer Länge entsprechend 50% der Höhe bzw. Breite eines Gewindegangs, gefräst wird bzw. dass der jeweilige Fräskopf in das Statorrohr über die Rohrlängsmitte hinaus um einen Wert von maximal 50% der Höhe bzw. Breite des ausgearbeiteten Gewindegangs, eingefahren wird.

Um eine rasche Bearbeitung möglichst ohne Fräspause sicherzustellen, ist es zweckmäßig, wenn bei Erreichen der Rohrlängsmitte durch den zweiten Fräskopf der erste Fräskopf in seine Ausgangsposition für den nächsten Fräsvorgang und für ein weiteres Einfahren in das Statorrohr zur Ausbildung eines weiteren Gewindegangs oder nochmalige Bearbeitung desselben Gewindegangs vor dem Ende des Rohres positioniert wird und bei Einfahren des ersten Fräskopfs in das Statorrohr der zweite Fräskopf in Richtung auf das andere dem ersten Fräskopf gegenüberliegende Ende des Rohres bzw. aus dem Rohr heraus verfahren wird.

Um ein rasches, kontinuierliches und exaktes Abarbeiten des Statorrohrmaterials zu erreichen, kann vorgesehen sein, dass während des jeweiligen Herausbewegens des ersten und/oder zweiten Fräskopfs aus dem Statorrohr die der beim Einfahren des jeweiligen Fräskopfs in das Statorrohr ausgebildeten Gewindeflanke bzw. Seitenfläche des Gewindegangs gegenüberliegende Gewindeflanke bzw. -seitenfläche bearbeitet bzw. gefräst wird.

Angepasst an die Form der Gewindegänge, deren Anzahl und das Material des Statorrohrs kann vorgesehen werden,

- dass die Geschwindigkeiten der Achsen gleich groß gehalten werden und/oder
- dass die Fräsköpfe mit gegebenenfalls konstanter und/oder gleich großer Rotationsgeschwindigkeit und/oder Vorschubgeschwindigkeit und/oder jeweils gleichzeitig in dieselbe Richtung bewegt werden und/oder
- dass die Fräsköpfe abwechselnd von den Rohrenden in das Statorrohr eingefahren werden.

Für den Einsatz des erfindungsgemäß hergestellten Statorrohrs hat es sich als vorteilhaft erwiesen, wenn der kreisförmige Umfang des Statorrohrs während der Bearbeitung unverändert beibehalten wird.

Weiters hat es sich als vorteilhaft erwiesen, wenn auf die Innenwandfläche des Statorrohrs nach der Ausbildung der Gewindegänge eine Elastomerschicht mit gleichbleibender Dicke aufgebracht wird.

Insbesondere wenn die Steigung der Gewindegänge über die Rohrlänge variiert, kann vorgesehen sein, dass die beiden Fräsköpfe unabhängig voneinander antreibbar sind und die beiden Fräskopfe bzw. die die Fräsköpfe tragenden Werkzeughalter bezüglich ihrer Geschwindigkeit längs der Längsachse und/oder ihrer Rundachse und/oder ihrer Fräsgeschwindigkeit unabhängig antreibbar sind.

Eine Vorrichtung der eingangs genannten Art zeigt,

- dass zur Bearbeitung der Innenwand des Statorrohrs zwei von einer Steuereinheit, vorzugsweise unabhängig voneinander, ansteuerbare und verstell- und rotierbare Fräsköpfe vorgesehen sind, und
- dass die Steuereinheit eingerichtet ist:

   - einen der Fräsköpfe dem Statorrohr anzunähern und bezüglich des Rohrendes in eine vorgegebenen Position zu verstellen,
   - den Fräskopf aus dieser definierten Position bezüglich seiner Rundachse und bezüglich seiner Linearachse auf Bearbeitungsgeschwindigkeit zu beschleunigen und längs seiner Linearachse in das Rohrinnere einzufahren und dabei einen Gewindegang auszuarbeiten, bis der Fräskopf zumindest die Längsmitte des Statorrohrs erreicht oder um einen vorgegebenen Wert überschreitet. Erfindungsgemäss ist die Steuereinheit eingerichtet:
   - abhängig von der Position des Fräskopfs und/oder vom Ort seines ersten Auftreffens auf dem Statorrohr den Austrittspunkt bzw. die Austrittskontur dieses ausgebildeten Gewindegangs oder eines anderen auszubildenden Gewindegangs am anderen, gegenüberliegenden Ende des Statorrohrs zu ermitteln oder zu errechnen und den zweiten Fräskopf an diese Stelle zu verfahren, dort die Bearbeitung der Innenwandfläche des Statorrohrs zu beginnen und den zweiten Fräskopf längs seiner Linearachse zu verschieben und um seine Rundachse zu verdrehen, bis dieser zumindest die Längsmitte des Statorrohrs erreicht oder um einen vorgegebenen Wert überschreitet, und
   - dieser jeweils ausgebildete Gewindegang mit dem jeweils anderen Fräskopf in der jeweils anderen Hälfte des Statorrohrs fortzusetzen bzw. weiter auszufräsen.

Diese Vorrichtung ist einfach aufgebaut betriebssicher, arbeitet effizient, und basiert auf an sich bekannten Elementen. Zweckmäßig ist vorgesehen, dass der Fräskopf von einem Werkzeughalter getragen ist, der einen Werkzeugantrieb und/oder eine Zentriervorrichtung und/oder eine Abstützeinrichtung und/oder einen Späneaustrag und/oder eine Kühlmittelzufuhr trägt.

Von Vorteil ist es, wenn der Werkzeughalter eine Lünette umfasst, die zur stabilen Führung des Fräskopfs hydraulisch, gegebenenfalls über einen Stützkegel, an die Innenwandfläche des Statorrohrs anlegbar ist.

Von Vorteil ist es auch, wenn die Kühlmittelzufuhr über den Antriebsstrang des Fräskopfs geführt und die Austrittsöffnung für das Kühlfluid direkt beim Fräskopf liegt.

Zur rascheren Bearbeitung kann vorgesehen sein, dass jeder Fräskopf eine Anzahl von nebeneinander auf einem Träger gelegenen Fräsköpfen umfasst, die gleichzeitig denselben Gewindegang bearbeiten bzw. fräsen.

Im Folgenden werden exemplarische, aber nicht einschränkend zu verstehende Ausführungsbeispiele der Erfindung anhand der Zeichnungen näher erläutert:

Die Fig. 1 und 2 zeigen schematische Ansichten von bekannten Statorrohren.
Fig. 3 eine Ansicht eines erfindungsgemäßen ausgebildeten Statorrohres.
Fig. 4 zeigt schematisch eine erfindungsgemäße Bearbeitungsmaschine bzw. Vorrichtung.
Fig. 5 zeigt einen Fräskopf.
Fig. 6 zeigt einen Werkzeughalter.
Fig. 7 zeigt schematisch einen in einem oder vor der Stirnfläche bzw. Öffnung eines Statorrohres befindlichen Fräskopf.

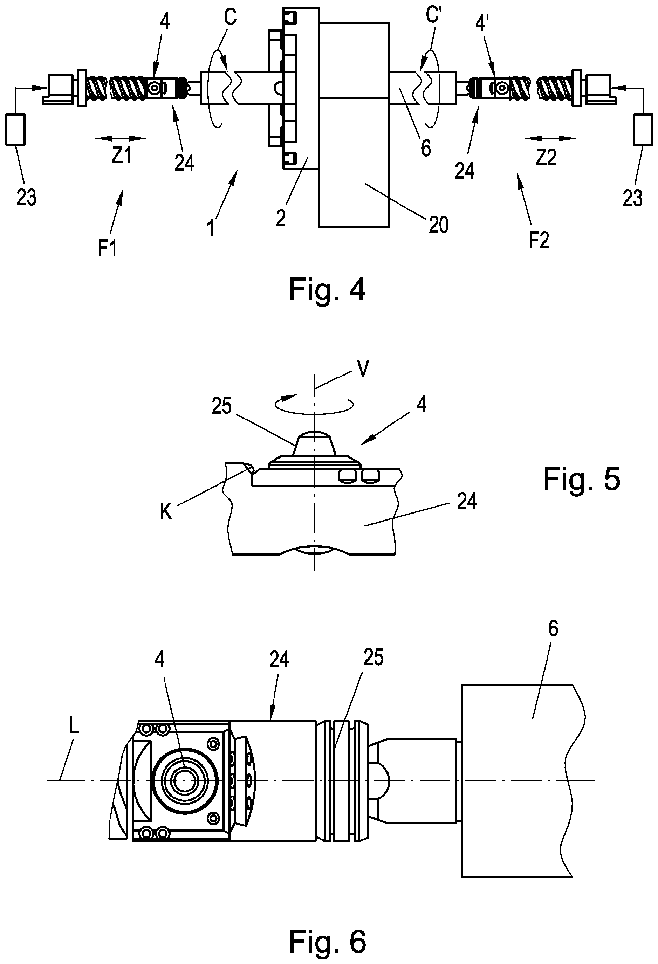

Zu Beginn der Herstellung eines Stators wird ein vorgefertigtes Metallrohr 6 mit der fertigen Länge des Bauteiles, z.B. 6000 mm, in eine Bearbeitungsmaschine 1 eingebracht und mittig mit einem Futter 2 geklemmt. Die Bearbeitungsmaschine 1 umfasst beidseitig des Futters 2 bzw. dessen Trägers 20 jeweils ein Fräswerkzeug, das jeweils in seinem vorderen, werkstücknahen Endbereich einen Fräskopf 4 trägt. Die Drehachse V des Fräskopfs 4 steht seitlich von einem Werkzeugträger ab, der in Längsrichtung des Rohrs 6 verstellbar und um dessen Längsachse L rotierbar ist. In Fig. 4 ist der prinzipielle Aufbau einer Bearbeitungsmaschine 1 dargestellt.

Die erfindungsgemäße Bearbeitungsmaschine bzw. Vorrichtung 1 umfasst einen Träger 20 bzw. ein Gestell 20, der/das ein Futter 2 trägt bzw. lagert, in das das zu bearbeitende Statorrohr 6 fest eingespannt werden kann. Beidseitig des Träger 20 sind Frässtationen F1, F2 ausgebildet, die jeweils einen von einem Werkzeughalter 24 getragenen Fräskopf 4, 4' aufweisen. Die auf dem Werkzeughalter 24 angeordneten Fräsköpfe 4, 4' sind in Fig. 5 in schematischem Schnitt näher dargestellt. Es handelt sich dabei um auf einem rotierenden Antrieb aufsetzbare Fräsköpfe, die von diesem Antrieb um ihre Rotationsachse V rotierbar sind. Der Werkzeugträger 24 für den einen Fräskopf 4 ist längs eine Längsachse Z1 bzw. der Werkzeugträger 24 für den Fräskopf 4' längs einer Längsachse Z2 verschiebbar gelagert, und somit in Längsrichtung des eingespannten Statorrohrs 6 linear verschiebbar. Gleichzeitig sind die von den Werkzeughaltern 24 getragenen Fräsköpfe 4, 4' mit dem jeweiligen Werkzeughalter 24 um eine Rundachse C, C' bzw. die Längsachse des Statorrohres 6 verdrehbar, sodass im Inneren des Statorrohrs 6 von den Fräsköpfen 4, 4' ein schraubenförmiger Gewindegang 10 ausgefräst werden kann. Mit schematisch angedeuteten Steuereinheiten 23 können die Fräsköpfe 4, 4' bezüglich ihrer Drehgeschwindigkeit gesteuert werden bzw. die Werkzeughalter 24 längs den Achsen Z1, Z2 und nur die Rundachsen C, C' bewegt bzw. verstellt werden. In Fig. 4 sind die Fräsköpfe 4, 4' in ihrer Ausgangsstellung dargestellt, d.h. in einer Stellung vor dem Beginn der Bearbeitung eines in den Träger 20 eingespannten Statorrohrs 6.

Der Produktionsprozess läuft beispielsweise wie folgt ab:
Jedes Fräswerkzeug umfasst einen Werkzeughalter 24, einen Werkzeugantrieb, eine Zentriervorrichtung, einen Späneaustrag, eine Kühlmittelzuführung K und den Fräskopf 4 und ist anfänglich dem Rohr 6 bzw. dessen Stirnfläche angenähert bzw. in das Rohr 6 eingeführt, bis der Fräskopf 4 in einem definierten Abstand zum Rohr 6 im Punkt I steht, wie in Fig. 4 dargestellt ist.

Zu diesem Zeitpunkt kann auch eine vom Werkzeughalter 24 getragene Innenlünette 25 hydraulisch an die Innenwand des Rohrs 6 angelegt werden, um eine stabile Führung des Fräskopfs 4 im Inneren des Rohrs 6 zu gewährleisten. Ferner wird die Kühlmittelzufuhr K, die über den Antriebsstrang bzw. den Werkzeughalter 24 direkt bis hinter den Fräskopf 4 geführt ist, in Betrieb genommen.

Danach werden die CNC-Rundachse C und die CNC-Linearachse Z1, insbesondere gleichzeitig, in Betrieb genommen und ergeben die Steigungsrichtung und den Steigungswinkel des auszubildenden Gewindegangs 10. Der Fräskopf 4 wird auf Schnittgeschwindigkeit beschleunigt.

Der Werkzeughalter 24 mit dem Fräskopf 4 fährt nunmehr mit konstantem Vorschub längs der Achse Z1+ in das Rohr 6 und der Fräskopf 4 bildet dabei einen Teil des im Rohr 6 zu erzeugenden Gewindegangs 10, z.B. einen Teil der Flanke 20 oder 21 des Gewindegangs 10.

Der Weg, welchen der Fräskopf 4 beim Einfahren zurücklegt, ergibt sich aus Rohrlänge, Fräsdurchmesser, Abstand von Fräskopf 4 zum Rohrende vor Fräsbeginn und Toleranzzugabe. So könnte sich der Weg für den Fräskopf 4 z.B. wie folgt errechnen:

Werkstücklänge: 6000 mm
Fräsdurchmesser: 20 mm
Abstand Fräser zu Werkstück: 10 mm
Toleranzzugabe: 10 mm

$$\mathrm{Weg}\ Z1 = \frac{6000}{2} + \frac{20}{2} + 10 + 10 = 3030\ \mathrm{mm}$$

Nach Erreichen des errechneten bzw. vorgegebenen Ausgangspunkts des Fräskopfs 4 für den Fräsbeginn bleibt die Achse Z1 stehen. Die Achse C wird gedreht bis der Fräskopf 4 die Stirnfläche oder die Innenwandfläche des Rohrs 6 im Bereich der auszubildenden bzw. zu bearbeitenden Flanke 20 des Gewindegangs 10 berührt bzw. vor dieser steht. Der Ausgangspunkt dieses Gewindegangs 10 wird gewählt bzw. vorgegeben. Alternativ kann vorgesehen sein, dass in dem zu fräsenden Rohr 6 vor Fräsbeginn bereits ein Gewindegang 10 vorgefertigt vorliegt.

Basierend auf diesem im Endbereich des Rohrs 6 gelegenen Berührungspunkt ergibt sich auf einer weiterführenden gedachten Spirallinie im Rohr, die dem auszubildenden Gewindegang entspricht, ein definierter Austrittspunkt des Gewindegangs 10 an der Planfläche II, d.h. der gegenüberliegenden Stirnfläche des Rohrs 6.

Danach starten die Achse Z1- und Achse C mit vorgegebener Drehrichtung und konstantem Vorschub und bewegen den Fräskopf bzw. den diesen tragenden Werkzeughalters 24. Hat der Fräskopf 4 die Mitte des Rohres bzw. diese um einen vorgegebenen Ausmaß überschritten, wird er ausgeschalten bzw. aus dem Rohr 6 wieder herausbewegt.

Fig. 6 zeigt schematisch einen Werkzeughalter 24 von dem ein Fräskopf 4 getragen ist. Im Werkzeughalter 24 sind die Kühlfluidleitung und die Spanaustrageinheit gelagert. Mit dem Stützteil bzw. der Lünette 25 kann der Werkzeughalter 24 an der Innenwand des Statorrohrs abgestützt werden.

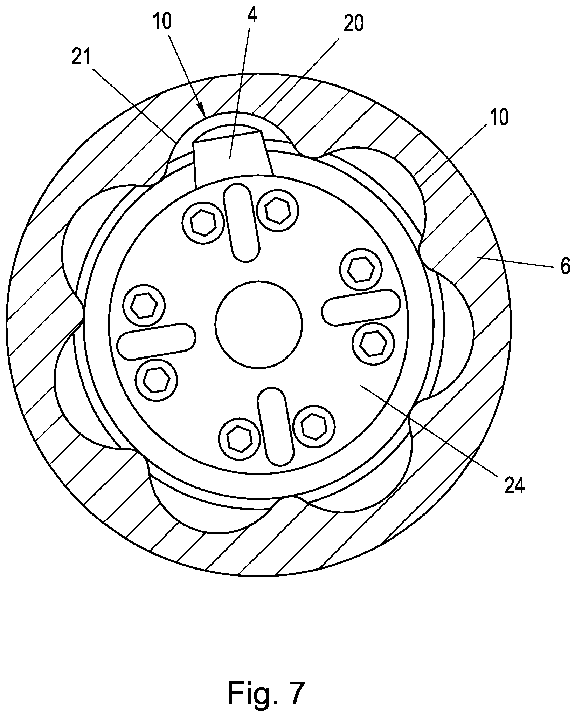

Fig. 7 zeigt einen schematischen Schnitt durch ein Statorrohr 6 mit einem Werkzeughalter 24 im Schnitt, wobei der Fräskopf 4 in einer Stellung steht, in der er an die Flanke 20, 21 eines bereits teilweise bearbeiteten Gewindegangs 10 anlegbar ist oder in welche der Fräskopf 4 nach einem Fräsvorgang als Ausgangslage für einen weiteren Fräsvorgang verstellt wurde.

Haben die Achsen Z1 und C jenen minimalen Weg zurückgelegt, der eine Übereinstimmung der gedachten bzw. berechneten Spirallinie auf Punkt II ergibt, so setzt sich der Fräskopf 4 mit seiner Achse Z2 nach links in Fig. 4 in Bewegung, und zwar mit derselben Geschwindigkeit wie die Achse Z1. Hat nun der Werkzeughalter 24 mit dem Fräskopf 4 mit der Achse Z1 seinen Ausgangspunkt erreicht, schaltet die Achse Z1 in Stillstand und wartet, bis der Werkzeughalter 24 mit Fräskopf 4' mit der Achse Z2 und Rundachse C' seine Innenposition erreicht und mit der Achse C' auf Position ß gedreht hat bzw. die Flanke 21 des Gewindegangs 10 erreicht hat und soweit mit der Achse Z2 gefahren ist, bis jener Punkt erreicht ist, der diesmal in entgegengesetzter Richtung auf einer gedachten, weiterführenden Spirallinie zur Planfläche I am linken Rohrende führt.

Dieses Prinzip wird nun solange wiederholt, bis alle Gewindegänge gegebenenfalls mehrfach ab- bzw. ausgearbeitet sind, da aufgrund des Spanvolumens und der Geometrie das Profil nicht zur Gänze mit einem Fräswerkzeug 4, 4' in einem Arbeitsschritt abgearbeitet werden kann. Es werden also so viele Fräsdurchgänge mit den Fräsköpfen 4, 4', gegebenenfalls mit unterschiedlichen Geometrien, durchgeführt, wie notwendig sind, bis das gewünschte Profil und die Gängeanzahl erreicht ist.

Sämtliche Bewegungen der Fräsköpfe 4, 4' werden von der Steuereinheit 23 gesteuert. Die Linearachse und Rundachse des jeweiligen Fräskopfes 4, 4' entsprechen der Längsachse und Rundachse des dort jeweiligen Fräskopfes 4, 4' tragenden Werkzeughalters 24 bei seiner Bewegung relativ zum Statorrohr 6.

**Patentansprüche**

1. Verfahren zur Herstellung eines Stators bzw. zur Bearbeitung der Innenwandung eines Stators für eine Exzenterschnecke oder einen Exzenterschneckenmotor durch Fräsbearbeitung des Statorrohrs (6), wobei zur Ausbildung der Rohrinnenkontur bzw. von Gewindegängen (10) zumindest ein Fräskopf (4) in das Rohrinnere eingeführt wird,

    - wobei zur Bearbeitung der Innenwand des Statorrohrs (6) zumindest zwei Fräsköpfe (4, 4') eingesetzt werden und bei Bearbeitungsbeginn einer der Fräsköpfe (4) dem Statorrohr (6) angenähert und bezüglich dieses Endes (I) des Statorrohrs (6) in eine vorgegebenen Position gebracht wird,
    - wobei der Fräskopf (4) aus dieser definierten Position bezüglich seiner Rundachse (C) und bezüglich seiner Linearachse (Z1) auf Bearbeitungsgeschwindigkeit beschleunigt und längs seiner Linearachse (Z1) in das Rohrinnere eingefahren und ein Gewindegang (10) ausgearbeitet wird, bis der Fräskopf zumindest die Längsmitte des Statorrohrs (6) erreicht oder um einen vorgegebenen Wert überschreitet, **dadurch gekennzeichnet,**
    - **dass**, abhängig vom Verlauf der einzelnen Gewindegänge (10) und von der Position des Fräskopfs (4) und/oder vom Ort seines Auftreffens auf das Statorrohr (6) der Austrittspunkt bzw. die Austrittskontur des von diesem Fräskopf (4) auszubildenden Gewindegangs (10) oder eines anderen, auszubildenden Gewindegangs (10) am anderen gegenüberliegenden Ende (II) des Statorrohrs (6) ermittelt oder errechnet wird und der zweite Fräskopf (4') an dieser Stelle mit seiner Bearbeitung der Innenwandfläche des Statorrohrs (6') beginnt und dieser Fräskopf (4') längs seiner Linearachse (Z2) verschoben und um seine Rundachse (C') verdreht wird, bis dieser Fräskopf (4') die Mitte des Statorrohrs (6) erreicht oder um einen vorgegebenen Wert überschreitet, und
    - **dass** die von dem jeweiligen Fräskopf (4, 4') bis zur Mitte ausgebildeten Gewindegänge mit dem jeweils anderen Fräskopf (4', 4) in der jeweils anderen Hälfte des Statorrohrs (6) fortgesetzt bzw. von der Mitte weiter bis zum jeweils anderen Ende (I, II) ausgefräst werden.

2. Verfahren nach Anspruch 1, **dadurch gekenn-**

**zeichnet, dass** ein Statorrohr (6) bearbeitet wird, dessen Innenkontur ein Verhältnis V von Länge L zum Durchmesser D von V = L:D $\geq$ 30:1, vorzugsweise $\geq$ 40:1, besitzt.

3. Verfahren nach Anspruch 1 oder 2, **dadurch gekennzeichnet,**

   - **dass** während der Fortbewegung des zweiten Fräskopfs (4') in das Innere des Statorrohrs (6) der erste Fräskopf (4) in dieselbe Richtung wie der zweite Fräskopf (4') aus dem Statorrohr (6) heraus bewegt wird und/oder
   - **dass** bei jeder Herausbewegung eines Fräskopfs (4, 4') der zuvor bei der Hineinbewegung von diesem Fräskopf (4, 4') gefräste Gewindegang (10) bearbeitet wird und/oder
   - **dass** während jedes Ein- und Ausfahrens eines Fräskopfs (4, 4') die halbe Länge eines Gewindegangs (10), gegebenenfalls zuzüglich einer Länge entsprechend 50% der Höhe bzw. Breite eines Gewindegangs (10), gefräst wird.

4. Verfahren nach einem der Ansprüche 1 bis 3, **dadurch gekennzeichnet, dass** der jeweilige Fräskopf (4, 4') in das Statorrohr (6) über die Rohrlängsmitte hinaus um einen Wert von maximal 50% der Höhe bzw. Breite des ausgearbeiteten Gewindegangs (10), eingefahren wird.

5. Verfahren nach einem der Ansprüche 1 bis 4, **dadurch gekennzeichnet, dass** bei Erreichen der Rohrlängsmitte durch den zweiten Fräskopf (4') der erste Fräskopf (4) in seine Ausgangsposition für den nächsten Fräsvorgang und für ein weiteres Einfahren in das Statorrohr (6) zur Ausbildung eines weiteren Gewindegangs (10) oder nochmalige Bearbeitung desselben Gewindegangs (10) vor dem Ende des Rohres (6) positioniert wird und bei Einfahren des ersten Fräskopfs (4) in das Statorrohr der zweite Fräskopf (4') in Richtung auf das andere dem ersten Fräskopf (4) gegenüberliegende Ende des Rohres bzw. aus dem Rohr (6) heraus verfahren wird.

6. Verfahren nach einem der Ansprüche 1 bis 5, **dadurch gekennzeichnet, dass** während des jeweiligen Herausbewegens des ersten und/oder zweiten Fräskopfs (4, 4') aus dem Statorrohr (6) die der beim Einfahren des jeweiligen Fräskopfs (4, 4') in das Statorrohr (6) ausgebildeten Gewindeflanke (20) bzw. Seitenfläche (21) des Gewindegangs (10) gegenüberliegende Gewindeflanke bzw. -seitenfläche bearbeitet bzw. gefräst wird.

7. Verfahren nach einem der Ansprüche 1 bis 6, **dadurch gekennzeichnet,**

   - **dass** die Geschwindigkeiten der Achsen (Z1, Z1') gleich groß gehalten werden und/oder
   - **dass** die Fräsköpfe (4, 4') mit gegebenenfalls konstanter und/oder gleich großer Rotationsgeschwindigkeit und/oder Vorschubgeschwindigkeit und/oder jeweils gleichzeitig in dieselbe Richtung bewegt werden und/oder
   - **dass** die Fräsköpfe (4, 4') abwechselnd von den Rohrenden in das Statorrohr (6) eingefahren werden.

8. Verfahren nach einem der Ansprüche 1 bis 7, **dadurch gekennzeichnet, dass** der kreisförmige Umfang des Statorrohrs (6) während der Bearbeitung unverändert beibehalten wird und/oder dass auf die Innenwandfläche des Statorrohrs (6) nach der Ausbildung der Gewindegänge (10) eine Elastomerschicht (22) mit gleichbleibender Dicke aufgebracht wird.

9. Verfahren nach einem der Ansprüche 1 bis 8, **dadurch gekennzeichnet, dass** die beiden Fräsköpfe (4, 4') unabhängig voneinander antreibbar sind bzw. angetrieben werden und die beiden Fräskopfe (4, 4') bezüglich ihrer Geschwindigkeit längs der Längsachse (Z1, Z2) und/oder ihrer Rundachse (C, C') und/oder ihrer Fräsgeschwindigkeit unabhängig antreibbar sind bzw. angetrieben werden.

10. Vorrichtung zur Herstellung eines Stators bzw. zur Bearbeitung der Innenwandung eines Statorrohrs (6) für eine Exzenterschnecke oder einen Exzenterschneckenmotor durch Fräsbearbeitung eines Statorrohrs (6), wobei zur Ausbildung der Rohrinnenkontur bzw. von Gewindegängen (10) im Statorrohr (6) zumindest ein in das Rohrinnere einführbarer Fräskopf (4, 4') vorgesehen ist, insbesondere zur Durchführung des Verfahrens nach einem der Ansprüche 1 bis 9,

   - wobei zur Bearbeitung der Innenwand des Statorrohrs (6) zwei von einer Steuereinheit (23), vorzugsweise unabhängig voneinander, ansteuerbare und verstell- und rotierbare Fräsköpfe (4, 4') vorgesehen sind, und
   - wobei die Steuereinheit (23) eingerichtet ist:

     - einen der Fräsköpfe (4) dem Statorrohr (6) anzunähern und bezüglich dieses Rohrendes in eine vorgegebenen Position zu verstellen,
     - den Fräskopf (4) aus dieser definierten Position bezüglich seiner Rundachse (C) und bezüglich seiner Linearachse (Z1) auf Bearbeitungsgeschwindigkeit zu beschleunigen und längs seiner Linearachse (Z1) in das Rohrinnere einzufahren und dabei einen Gewindegang (10) auszuarbeiten, bis der Fräskopf (4) zumindest die Längsmitte des Statorrohrs (6) erreicht oder um einen vorgegebenen Wert überschreitet, **dadurch gekennzeichnet, dass** die Steuereinheit eingerichtet ist:

- abhängig von der Position des Fräskopfs (4) und/oder vom Ort seines ersten Auftreffens auf dem Statorrohr (6) den Austrittspunkt bzw. die Austrittskontur dieses ausgebildeten Gewindegangs (10) oder eines anderen auszubildenden Gewindegangs (10) am anderen, gegenüberliegenden Ende des Statorrohrs (6) zu ermitteln oder zu errechnen und den zweiten Fräskopf (4') an diese Stelle zu verfahren, dort die Bearbeitung der Innenwandfläche des Statorrohrs (6) zu beginnen und den zweiten Fräskopf (4') längs seiner Linearachse (Z2) zu verschieben und um seine Rundachse (C') zu verdrehen, bis dieser zumindest die Längsmitte des Statorrohrs (6) erreicht oder um einen vorgegebenen Wert überschreitet, und

- diese jeweils ausgebildeten Gewindegänge (10) mit dem jeweils anderen Fräskopf (4, 4') in der jeweils anderen Hälfte des Statorrohrs (6) fortzusetzen bzw. weiter auszufräsen.

11. Vorrichtung nach Anspruch 10, **dadurch gekennzeichnet, dass** die Innenwandfläche des gegebenenfalls mit einem Elastomer (22) ausgekleideten Statorrohrs (6) eine Abmessung bzw. Innenkontur besitzt, die ein Verhältnis V von Länge L zum Durchmesser D von V = L:D $\geq$ 30:1, vorzugsweise 40:1 zeigt.

12. Vorrichtung nach Anspruch 10 oder 11, **dadurch gekennzeichnet, dass** der Fräskopf (4, 4') von einem Werkzeughalter (24) getragen ist, der einen Werkzeugantrieb und/oder eine Zentriervorrichtung und/oder eine Abstützeinrichtung und/oder einen Späneaustrag und/oder eine Kühlmittelzufuhr trägt.

13. Vorrichtung nach einem der Ansprüche 10 bis 12, **dadurch gekennzeichnet, dass** der Werkzeughalter (24) eine Lünette (25) umfasst, die zur stabilen Führung des Fräskopfs (4. 4') hydraulisch, gegebenenfalls über einen Stützkegel, an die Innenwandfläche des Statorrohrs (6) anlegbar ist.

14. Vorrichtung nach einem der Ansprüche 12 oder 13, **dadurch gekennzeichnet, dass** die Kühlmittelzufuhr (K) über den Antriebsstrang des Fräskopfs (4, 4') geführt und die Austrittsöffnung für das Kühlfluid direkt beim Fräskopf liegt.

15. Vorrichtung nach einem der Ansprüche 10 bis 14, **dadurch gekennzeichnet, dass** jeder Fräskopf (4, 4') eine Anzahl von nebeneinander auf einem Träger gelegenen Fräsköpfen umfasst, die gleichzeitig denselben Gewindegang (10) bearbeiten bzw. fräsen.

## Claims

1. A method for producing a stator or for processing the inner wall of a stator for an eccentric screw or an eccentric screw motor by milling the stator tube (6), wherein at least one milling head (4) is inserted into the tube interior to form the inner contour of the tube or threads (10),

   - wherein, for processing the inner wall of the stator tube (6), at least two milling heads (4, 4') are used and, at the start of processing, one of the milling heads (4) approaches the stator tube (6) and is brought into a predetermined position in relation to this end (I) of the stator tube (6),
   - wherein the milling head (4) accelerates to processing speed from this defined position with regard to its rotary axis (C) and with regard to its linear axis (Z1) and is retracted along its linear axis (Z1) into the tube interior and a thread (10) is worked out until the milling head reaches at least the longitudinal centre of the stator tube (6) or exceeds the same by a predetermined value, **characterised**
   - **in that**, depending on the course of the individual threads (10) and the position of the milling head (4) and/or the location of its impact on the stator tube (6), the exit point or the exit contour of the thread (10) to be formed by this milling head (4) or another thread (10) to be formed at the other opposite end (II) of the stator tube (6) is determined or calculated, and the second milling head (4') at this point begins its processing of the inner wall surface of the stator tube (6') and this milling head (4') is displaced along its linear axis (Z2) and rotated about its rotary axis (C') until this milling head (4') reaches the centre of the stator tube (6) or exceeds the same by a predetermined value, and
   - **in that** the threads formed halfway down by the respective milling head (4, 4') are continued by the respective other milling head (4', 4) in the respective other half of the stator tube (6) or are further milled from the centre to the respective other end (I, II).

2. The method according to claim 1, **characterised in that** a stator tube (6) is processed, the inner contour of which has a ratio V of length L to diameter D of V = L:D $\geq$ 30:1, preferably $\geq$ 40:1.

3. The method according to claim 1 or 2, **characterised in**

- **that**, during the movement of the second milling head (4') into the interior of the stator tube (6), the first milling head (4) is moved out of the stator tube (6) in the same direction as the second milling head (4') and/or
- **that**, during each outward movement of a milling head (4, 4'), the thread (10) milled previously during the inward movement of this milling head (4, 4') is processed and/or
- **that**, during each entry and exit of a milling head (4, 4'), half the length of a thread (10), optionally plus a length corresponding to 50% of the height or width of a thread (10), is milled.

4. The method according to any one of claims 1 to 3, **characterised in that** the respective milling head (4, 4') is retracted into the stator tube (6) beyond the tube longitudinal centre by a value of not more than 50% of the height or width of the worked out thread (10).

5. The method according to one of claims 1 to 4, **characterised in that**, when the tube longitudinal centre is reached by the second milling head (4'), the first milling head (4) is positioned in front of the end of the tube (6) in its starting position for the next milling operation and for a further retraction into the stator tube (6) for forming a further thread (10) or reworking the same thread (10), and upon retraction of the first milling head (4) into the stator tube, the second milling head (4') is moved out in the direction of the other end of the tube that is opposite the first milling head (4) or out of the tube (6).

6. The method according to any one of claims 1 to 5, **characterised in that**, during the respective moving out of the first and/or second milling head (4, 4') from the stator tube (6), the thread flank or lateral surface positioned opposite the thread flank (20) or lateral surface (21) of the thread (10) formed during the retraction of the respective milling head (4, 4') into the stator tube (6) is processed or milled.

7. The method according to any one of claims 1 to 6, **characterised in**

- **that** the speeds of the axes (Z1, Z1') are kept equal and/or
- **that** the milling heads (4, 4') are moved with optionally constant and/or equal rotational speed and/or feed speed and/or in each case concurrently in the same direction and/or
- **that** the milling heads (4, 4') are retracted alternately from the tube ends into the stator tube (6).

8. The method according to any one of claims 1 to 7, **characterised in that** the circular circumference of the stator tube (6) is maintained unchanged during the processing and/or that, on the inner wall surface of the stator tube (6), after the formation of the threads (10), an elastomer layer (22) with a constant thickness is applied.

9. The method according to any one of claims 1 to 8, **characterised in that** the two milling heads (4, 4') are independently drivable or driven and the two milling heads (4, 4') are independently drivable or driven with respect to their speed along the longitudinal axis (Z1, Z2) and/or its rotary axis (C, C') and/or its milling speed.

10. A device for producing a stator or for processing the inner wall of a stator tube (6) for an eccentric screw or an eccentric screw motor by milling a stator tube (6), wherein, for the formation of the tube inner contour or threads (10) in the stator tube (6), at least one milling head (4, 4') that is insertable into the tube interior is provided, particularly for carrying out the method according to any one of claims 1 to 9,

- wherein, for processing the inner wall of the stator tube (6), two milling heads (4, 4') that are controllable by a control unit (23), preferably independently of one another, and adjustable and rotatable are provided, and
- wherein the control unit (23) is configured:
- to bring one of the milling heads (4) closer to the stator tube (6) and to adjust said milling head to a predetermined position with respect to this tube end,
- to accelerate the milling head (4) to processing speed from this defined position with respect to its rotary axis (C) and with respect to its linear axis (Z1) and to retract the same along its linear axis (Z1) into the tube interior and to thereby work out a thread (10) until the milling head (4) reaches at least the longitudinal centre of the stator tube (6) or exceeds the same by a predetermined value, **characterised in that** the control unit is configured:
- to determine or to calculate, depending on the position of the milling head (4) and/or the location of its first impact on the stator tube (6), the exit point or the exit contour of this formed thread (10) or another thread (10) to be formed at the other, opposite end of the stator tube (6), and to move the second milling head (4') to this point, to begin there the processing of the inner wall surface of the stator tube (6) and to displace the second milling head (4') along its linear axis (Z2) and to rotate the same about its rotary axis (C') until this at least reaches the longitudinal centre of the stator tube (6) or exceeds the same by a predetermined value, and
- to continue or further mill these respectively formed threads (10) with the respective other milling head (4, 4') in the respective other half of the stator tube (6).

11. The device according to claim 10, **characterised in that** the inner wall surface of the optionally elastomer-lined (22) stator tube (6) has a dimension or inner contour having a ratio V of length L to diameter D of V = L:D $\geq$ 30:1, preferably 40:1.

12. The device according to claim 10 or 11, **characterised in that** the milling head (4, 4') is held by a tool holder (24) having a tool drive and/or a centring device and/or a support device and/or a chip outlet and/or a coolant supply.

13. The device according to any one of claims 10 to 12, **characterised in that** the tool holder (24) comprises a steady rest (25), which can be hydraulically applied for the stable guidance of the milling head (4, 4'), optionally via a support cone, to the inner wall surface of the stator tube (6).

14. The device according to any one of claims 12 or 13, **characterised in that** the coolant supply (K) is guided via the drive train of the milling head (4, 4') and the outlet opening for the cooling fluid is located directly at the milling head.

15. The device according to one of claims 10 to 14, **characterised in that** each milling head (4, 4') comprises a number of milling heads arranged side by side on a support, which simultaneously process or mill the same thread (10).


**Revendications**

1. Procédé de fabrication d'un stator ou d'usinage de la paroi intérieure d'un stator pour une vis excentrique ou un moteur à vis excentrique par fraisage du tube de stator (6), au moins une tête de fraisage (4) étant insérée dans l'intérieur du tube pour former le contour intérieur du tube ou des filets (10),

   - au moins deux têtes de fraisage (4, 4') servant à usiner la paroi intérieure du tube de stator (6) et au début de l'usinage l'une des têtes de fraisage (4) étant rapprochée du tube de stator (6) et mise dans une position prédéfinie par rapport à cette extrémité (I) du tube de stator (6),
   - la tête de fraisage (4) à partir de cette position prédéfinie par rapport à son axe de rotation (C) et par rapport à son axe linéaire (Z1) étant accélérée à la vitesse d'usinage et insérée dans l'intérieur du tube le long de son axe linéaire (Z1) et un filet (10) étant travaillé jusqu'à ce que la tête de fraisage ait au moins atteint le centre longitudinal du tube de stator (6) ou le dépasse d'une valeur prédéfinie, **caractérisé**

   - **en ce que**, en fonction de l'évolution des filets individuels (10) et de la position de la tête de fraisage (4) et/ou de l'emplacement de son impact sur le tube de stator (6), le point de sortie ou le contour de sortie du filet (10) à former par cette tête de fraisage (4) ou un autre filet (10) à former à l'autre extrémité opposée (II) du tube de stator (6) est déterminé ou calculé et la seconde tête de fraisage (4') commence l'usinage de la paroi intérieure du stator (6') en ce point et cette tête de fraisage (4') est déplacée le long de son axe linéaire (Z2) et mise en rotation autour de son axe de rotation (C') jusqu'à ce que cette tête de fraisage (4') atteigne le centre du tube de stator (6) ou le dépasse d'une valeur prédéfinie, et
   - **en ce que** les filets formés par la tête de fraisage respective (4, 4') jusqu'au milieu, se poursuivent dans l'autre moitié respective du tube de stator (6) par l'autre tête de fraisage respective (4', 4) ou sont fraisés du milieu vers l'autre extrémité respective (I, II).

2. Procédé selon la revendication 1, **caractérisé en ce qu'**un tube de stator (6) est usiné, dont le contour intérieur présente un rapport V de la longueur L au diamètre D de V = L:D $\geq$ 30:1, de préférence $\geq$ 40:1.

3. Procédé selon l'une des revendications 1 ou 2, caractérisé en ce

   - lors du déplacement de la seconde tête de fraisage (4') à l'intérieur du tube de stator (6), la première tête de fraisage (4) est extraite du tube de stator (6) dans la même direction que la seconde tête de fraisage (4') et/ou
   - lors de chaque extraction d'une tête de fraisage (4, 4'), le filet (10) préalablement fraisé lors du déplacement vers l'intérieur de cette tête de fraisage (4, 4') est usiné et/ou
   - lors de chaque entrée et sortie d'une tête de fraisage (4, 4'), la moitié de la longueur d'un filet (10), éventuellement augmentée d'une longueur correspondant à 50 % de la hauteur ou de la largeur d'un filet (10), est fraisée.

4. Procédé selon l'une des revendications 1 à 3, **caractérisé en ce que** la tête de fraisage respective (4, 4') est introduite dans le tube de stator (6) au-delà du centre longitudinal du tube d'une valeur ne dépassant pas 50 % de la hauteur ou de la largeur du filet (10) travaillé.

5. Procédé selon l'une des revendications 1 à 4, **caractérisé en ce que** lorsque la seconde tête de fraisage (4') atteint le centre longitudinal du tube, la première tête de fraisage (4) est positionnée devant l'extrémité du tube (6) en sa position de départ pour l'opération de fraisage suivante et pour une insertion ultérieure dans le tube de stator (6) pour la formation d'un autre filet (10) ou le réusinage du même filet (10) et lors de l'insertion de la première tête de fraisage (4) dans le tube de stator, la seconde tête de fraisage (4') est extraite en direction de l'autre extrémité du tube opposée à la première tête de fraisage (4) ou du tube (6).

6. Procédé selon l'une des revendications 1 à 5, **caractérisé en ce que** lors du retrait respectif de la première et/ou de la seconde tête de fraisage (4, 4') du tube de stator (6), le flanc ou la surface latérale de filet opposée au flanc de filet (20) ou à la surface latérale (21) du filet (10) formée lors de l'insertion de la tête de fraisage respective (4, 4') dans le tube de stator (6) est usinée ou fraisée.

7. Procédé selon l'une quelconque des revendications 1 à 6, **caractérisé en ce que**

   - que les vitesses des axes (Z1, Z1') sont maintenues similaires et/ou
   - **en ce que** les têtes de fraisage (4, 4') sont déplacées à une vitesse de rotation et/ou à une vitesse d'avance éventuellement constante et/ou égale et/ou chaque fois simultanément dans la même direction et/ou
   - **en ce que** les têtes de fraisage (4, 4') sont alternativement introduites des extrémités du tube dans le tube de stator (6).

8. Procédé selon l'une des revendications 1 à 7, **caractérisé en ce que** la périphérie circulaire du tube de stator (6) est maintenue inchangée pendant l'usinage et/ou **en ce que** sur la surface de la paroi intérieure du tube de stator (6), après la formation des filets (10), une couche d'élastomère (22) d'une épaisseur constante est appliquée.

9. Procédé selon l'une des revendications 1 à 8, **caractérisé en ce que** les deux têtes de fraisage (4, 4') peuvent être ou sont entraînées indépendamment l'une de l'autre et les deux têtes de fraisage (4, 4') peuvent être ou sont entraînées indépendamment en ce qui concerne leur vitesse le long de l'axe longitudinal (Z1, Z2) et/ou leur axe de rotation (C, C') et/ou leur vitesse de fraisage.

10. Dispositif de fabrication d'un stator ou d'usinage de la paroi intérieure d'un tube de stator (6) pour une vis excentrique ou à un moteur à vis excentrique par fraisage d'un tube de stator (6), au moins une tête de fraisage (4, 4') insérable à l'intérieur du tube servant à former un contour intérieur du tube ou de filets (10) dans le tube de stator (6), en particulier à exécuter le procédé selon l'une des revendications 1 à 9,

   - deux têtes de fraisage (4, 4') réglables et rotatives, et pouvant être entraînées par une unité de commande (23), de préférence indépendamment l'une de l'autre, servant à l'usinage de la paroi intérieure du tube de stator (6), et
   - l'unité de commande (23) étant conçue :
   - pour rapprocher l'une des têtes de fraisage (4) du tube de stator (6) et l'ajuster dans une position prédéfinie par rapport à cette extrémité de tube,
   - pour accélérer la tête de fraisage (4) à la vitesse d'usinage depuis cette position définie, par rapport à son axe de rotation (C) et par rapport à son axe linéaire (Z1) et pour l'insérer le long de son axe linéaire (Z1) dans l'intérieur du tube afin de réaliser un filet (10) jusqu'à ce que la tête de fraisage (4) atteigne au moins le centre longitudinal du tube de stator (6) ou le dépasse d'une valeur prédéfinie, **caractérisé en ce que** l'unité de commande est conçue :
   - pour déterminer ou calculer, en fonction de la position de la tête de fraisage (4) et/ou de l'emplacement de son premier impact sur le tube de stator (6), le point de sortie ou le contour de sortie de ce filet (10) formé ou d'un autre filet (10) à former à l'autre extrémité opposée du tube de stator (6) et pour déplacer la seconde tête de fraisage (4') en ce point, pour y commencer l'usinage de la surface de paroi intérieure du tube de stator (6) et pour déplacer la seconde tête de fraisage (4') le long de son axe linéaire (Z2) et pour la mettre en rotation autour de son axe de rotation (C') jusqu'à atteindre au moins le centre longitudinal du tube de stator (6) ou le dépasser d'une valeur prédéfinie, et
   - pour poursuivre ou continuer à fraiser ces filets (10) respectivement formés par l'autre tête de fraisage respective (4, 4') dans l'autre moitié respective du tube de stator (6).

11. Dispositif selon la revendication 10, **caractérisé en ce que** la surface de la paroi interne du tube de stator (6) le cas échéant revêtu d'un élastomère (22), présente une dimension ou un contour intérieur présentant un rapport V de la longueur L au diamètre D de $V = L:D \geq 30:1$, de préférence 40:1.

12. Dispositif selon la revendication 10 ou 11, **caractérisé en ce que** la tête de fraisage (4, 4') est supportée par un porte-outil (24) comportant un entraînement d'outil et/ou un centreur et/ou un dispositif de support et/ou une évacuation de copeaux et/ou un apport de liquide de refroidissement.

13. Dispositif selon l'une des revendications 10 à 12, **caractérisé en ce que** le porte-outil (24) comprend une lunette (25) qui peut être appliquée sur la surface de la paroi interne du tube de stator (6) pour le guidage hydraulique stable de la tête de fraisage (4, 4'), éventuellement par l'intermédiaire d'un cône de support.

14. Dispositif selon l'une des revendications 12 ou 13, **caractérisé en ce que** l'apport de fluide de refroidissement (K) est dirigé par l'intermédiaire de la chaîne cinématique de la tête de fraisage (4, 4') et l'ouverture de sortie pour le fluide de refroidissement se situe directement au niveau de la tête de fraisage.

15. Dispositif selon l'une des revendications 10 à 14, **caractérisé en ce que** chaque tête de fraisage (4, 4') comprend un certain nombre de têtes de fraisage disposées côte à côte sur un support qui, simultanément, usinent ou fraisent le même filet (10).

**Fig. 1**

**Fig. 2**

**Fig. 3**

Fig. 4

Fig. 5

Fig. 6

Fig. 7

**IN DER BESCHREIBUNG AUFGEFÜHRTE DOKUMENTE**

**In der Beschreibung aufgeführte Patentdokumente**

- US 20120294687 A1